# EUROPEAN PATENT APPLICATION

(11) **EP 4 481 663 A1**
(43) Date of publication of application: **25.12.2024**
(21) Application number: 23180770.2
(22) Date of filing: 21.06.2023
(51) Int. Cl.: G06Q 30/0207

(54) **METHOD AND SYSTEM FOR OPTIMIZING BONUS POINTS AND DISCOUNTS IN ONLINE RETAIL TRANSACTIONS**

(71) Applicant: MyBonuz GmbH, 36093 Künzell (DE)
(72) Inventor: Wiens, Eduard, 36093 Künzell (DE); Krah, Oliver, 36093 Künzell (DE)
(74) Representative: Mzb PartmbB

(57) **Abstract**

The present invention pertains to the field of online retail and e-commerce, addressing the technical problem of optimizing bonus points and discounts in online transactions. The invention offers a method for identifying the online shop offering the maximum value for a specified product through the smart association of products with applicable coupons and vouchers. This is achieved through automated data processing and Al-supported search functionality. The invention further incorporates temporal aspects of coupon and voucher validity and product-specific discounts, providing a comprehensive solution. The invention is industrially applicable, especially in enhancing customer decision-making in online purchases, promoting online retailers' product offerings, and adding value to intermediary platforms. Overall, it enhances the efficiency and effectiveness of online retail transactions, benefitting customers, online shops, and e-commerce platforms.

## Description

### Technical Field

The invention relates to the process and products as per the prior art portion of the independent claims.

### Background Art

The expansion of online commerce in recent years has seen a concomitant increase in customer loyalty programs offered by various online shops. These programs often provide incentives to customers in the form of bonus points or coupons, which can be redeemed to receive discounts on future purchases. The value of these bonus points typically corresponds to the monetary value of purchases made at the online shop.

Loyalty programs can enhance customer retention by encouraging repeat purchases, often making customers feel rewarded for their loyalty to a particular shop. However, the value of bonus points can vary significantly between different shops and between different products within the same shop. This variability can make it challenging for consumers to optimize the value of their bonus points and to determine where the greatest benefit can be obtained.

Prior art technologies have sought to address this challenge. Some systems aggregate coupon offers from multiple online shops and allow users to search for the best coupon deals. These systems, however, do not typically incorporate product data from the online shops and, therefore, cannot provide comprehensive information about the value of bonus points that can be earned for specific products.

Further, previous systems typically require users to manually compare the value of bonus points or discounts from different shops. Such manual comparison can be time-consuming and inaccurate, especially when dealing with many products and shops.

Other systems have attempted to automatically compare prices of products across different online shops. However, these systems have not been designed to incorporate data about bonus points and coupons, thus failing to provide a comprehensive comparison of the overall value of purchasing a product from one shop versus another.

### Summary of Invention

The invention is set out in the appended set of claims.

### Technical Problem

The technical problem underlying the invention lies in the efficient and accurate optimization of the value derived from bonus points or coupons during online transactions.

In the complex landscape of e-commerce, consumers are faced with a vast array of choices, not only in terms of products and services, but also concerning the multitude of bonus point programs and coupon deals offered by various online shops. While these programs are intended to incentivize customer loyalty and encourage purchasing behavior, they often serve to complicate the purchasing decision due to their variability and the challenges inherent in effectively comparing the relative value they offer. This complexity is exacerbated when the temporal validity of such offers is taken into consideration.

In existing systems, consumers are left to manually navigate through this complexity. The onus lies on the individual consumer to discern and compare the relative value of different bonus programs, taking into consideration the product price, the bonus points offered, the temporal validity of coupons, and the terms of redemption. This represents a time-consuming and cumbersome process, prone to oversights and miscalculations that can result in suboptimal purchasing decisions.

Current systems that aggregate and compare coupons often fail to incorporate comprehensive product data and do not provide tools for accurately calculating and comparing the effective value of bonus points for specific products. They are also ill-equipped to handle time-limited offers effectively and do not generally incorporate discount voucher codes into their comparison algorithms.

Additionally, these systems do not leverage the benefits of modern technologies, such as artificial intelligence or machine learning, in the processing and comparison of bonus point and coupon data. Therefore, the matching of coupons to products, the optimization of search functions, and the learning of user preferences over time are not capabilities found in the current state of the art.

Therefore, the technical problem lies in creating a method that overcomes these limitations, by providing an efficient and accurate way to optimize the value of bonus points and coupons in online transactions, and by effectively utilizing modern technological advancements in the processing and comparison of the data involved.

### Solution to Problem

As shall be further elucidated in the following description, this problem is solved as per the characterizing portion of the independent claims.

### Advantageous Effects of Invention

The invention confers several advantageous effects that represent marked improvements over the state of the prior art, addressing the technical problem at hand with notable efficacy.

Firstly, by automating the process of reading and processing product and coupon data from multiple online shops, the invention substantially alleviates the burden traditionally placed on the consumer. In this way, the consumer is spared the time-consuming and error-prone process of manually searching for products and coupons, comparing their relative value, and determining the most advantageous purchase decision. This represents a significant improvement in the efficiency of the purchasing process and contributes to an enhanced user experience.

Secondly, the invention's use of an Al-supported matching algorithm to associate the coupons with the respective products introduces a degree of accuracy and reliability hitherto unseen in the realm of online shopping. The AI-supported algorithm ensures that the most relevant and advantageous coupons are reliably matched with each product, thus enabling the consumer to realize the maximum value of their bonus points with confidence.

Furthermore, the AI-supported search function allows for a dynamic, personalized user experience that can adapt over time to individual user preferences. This means that the more the system is used, the better it becomes at delivering relevant and advantageous results for each specific user, further enhancing the value derived from bonus points and coupons.

Incorporation of temporal elements, such as time-limited coupons or discount voucher codes, represents a further advantageous effect of the invention. The system's ability to effectively process and incorporate these temporal elements ensures that users are made aware of time-limited offers that may significantly enhance the value of their bonus points, avoiding missed opportunities and contributing to more optimal purchase decisions.

Lastly, the invention's capability to integrate discount voucher code data from various sources introduces an additional dimension of value optimization. By incorporating these discount voucher codes into the algorithm, the invention provides users with an even broader spectrum of potential savings, thus further optimizing the overall value of their online transactions.

In summary, the invention provides a comprehensive and effective solution to the technical problem of optimizing the value of bonus points and coupons in online transactions. It introduces efficiency, accuracy, and dynamism to the purchasing process and offers users an enhanced, personalized, and lucrative online shopping experience.

### Brief Description of Drawings

Fig. 1 is a schematic of a first variant of the invention.
Fig. 2 is a schematic of a second variant of the invention.

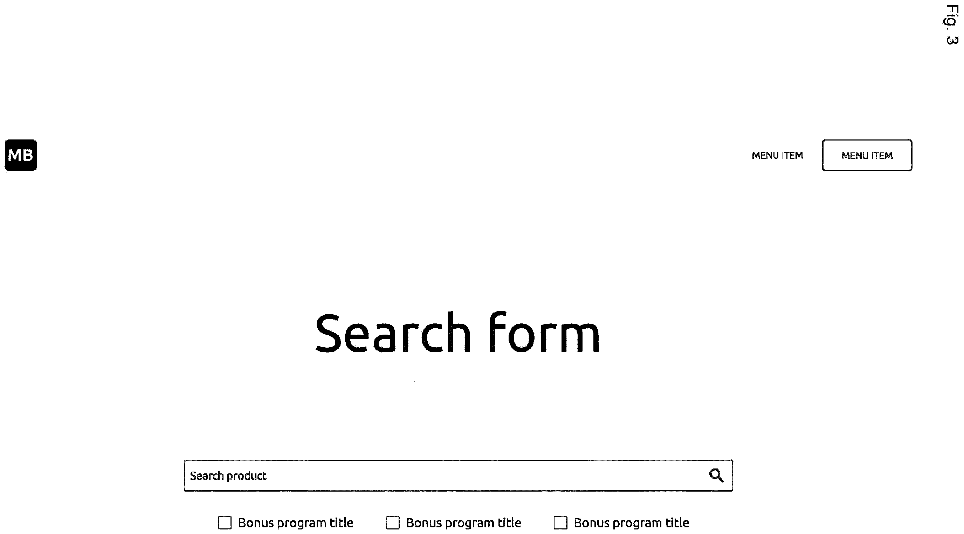

Fig. 3 is a wireframe of the search page of a platform as per the invention.

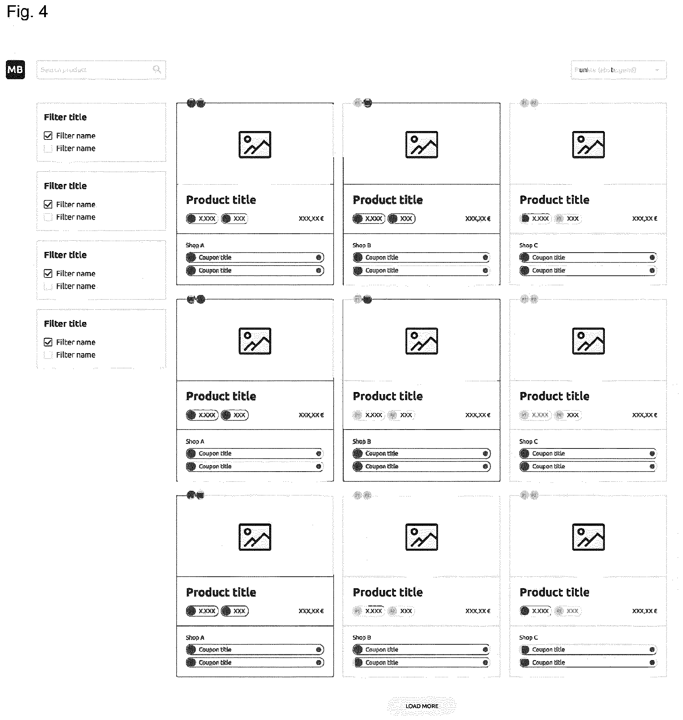

Fig. 4 is a wireframe of the result page of a platform as per the invention.

### Description of Embodiments

The invention is directed towards a method for optimizing the value of bonus points in an online transaction, employing an integrated, intelligent system to facilitate this process. To present users with the most advantageous shopping options, the system functions by aggregating, storing, associating, and searching product data, coupon data, and, where available, voucher data. This search is implemented through AI-aided technology, potentially incorporating machine learning techniques to improve performance over time.

A preliminary step in the implementation of the invention involves the automated extraction and storing of product data and coupon data from various online shops. The product data, specifying the products available and their associated prices, may be downloaded in extensible markup language (XML) or as comma-separated values (CSV) from the online shops as indicated by their uniform resource locators (URLs). Concurrently or independently, coupon data, detailing the coupons available and their corresponding bonuses, may be acquired via an application programming interface (API) in a format such as JavaScript Object Notation (JSON). Another way of collecting coupon data is web site scraping, where web site data and content is read and stored manually or automatically. In manual scraping, a human primarily navigates, identifies and copies the relevant data. In automated scraping, on the other hand, a programmed script or specially developed scraping software identifies, navigates and saves the data.

The automated system ensures that the stored product data remains current, by regularly updating it through repeated downloads. Furthermore, it alerts users to time-limited offers that may provide exceptionally high bonus point values.

Subsequently, an artificial intelligence (AI), as per a given matching algorithm, associates products with applicable coupons based on the stored data. The matching process may consider shared or compatible attributes such as identifiers and factor in the temporal validity of coupons, shop of origin, and product categories, among others.

Upon receipt of a search term specifying a product, the system conducts a comprehensive search of the stored data to locate the product and any associated coupons. This search is implemented through AI-aided technology, potentially incorporating machine learning techniques to improve performance over time.

Finally, as a result of the search, the system presents the user with information indicating the shop that offers the maximum bonus for the purchase of the desired product. This information includes the price of the product and the quantifiable bonus, such as expressed in "points" or "miles", being offered by the shop.

### Example 1

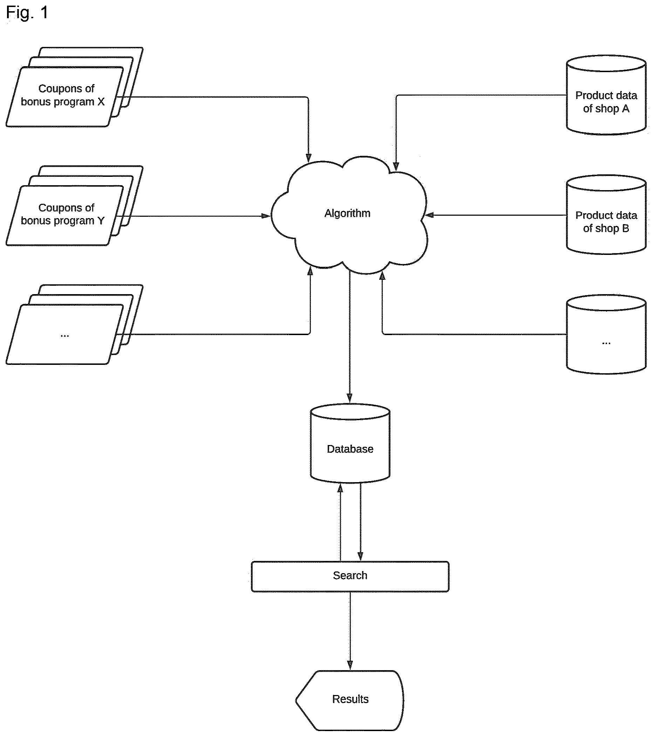

In an exemplary embodiment depicted in Fig. 1, consider a scenario where a user wishes to purchase an iPhone from an online shop. The system has downloaded product data from multiple online shops X and Y and stored this data. The price of an iPhone in Shop X is € 1,000, and in Shop Y it is € 950.

The system has also downloaded coupon data via API in JSON format. Coupon X, when redeemed at shop X, allows the user to earn 10 times the regular bonus points, and coupon Y, when redeemed at shop Y, allows the user to earn twice the regular bonus points.

On receipt of the search term "iPhone", the Al-supported matching algorithm associates the sought-after smartphone with the applicable coupons. It then presents a comparison to the user, illustrating that the purchase from shop X with coupon X would result in 5,000 points, while the purchase from shop Y with coupon Y would result in 1,000 points.

Thus, despite the marginally higher price, shop X may present the preferable offer in terms of bonus point value.

### Example 2

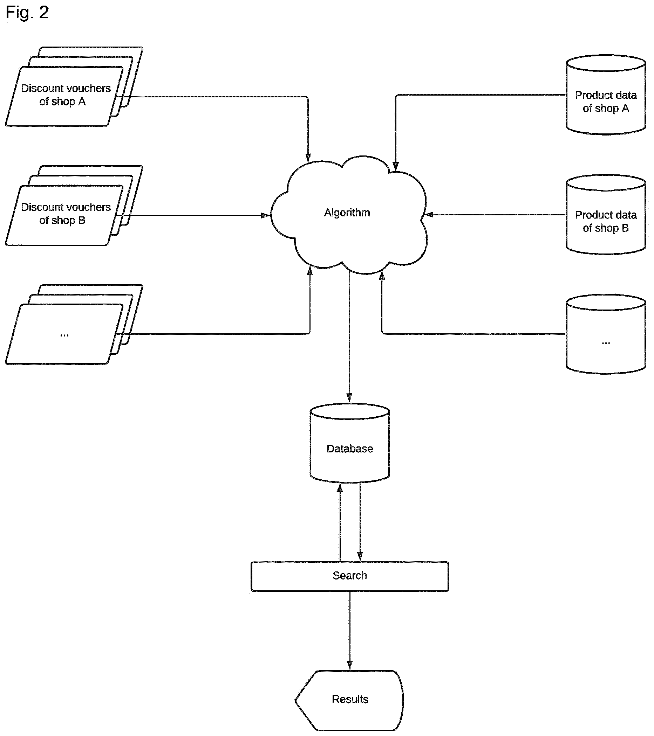

In another embodiment outlined in Fig. 2, the system also incorporates voucher data. This data, representing discount vouchers obtained from various sources on the Internet or directly from cooperative shops, is stored along with the product and coupon data. Each voucher entitles the user to a discount, either as a specific percentage or cash amount, off the original price of a product.

For instance, the system has stored voucher code X, which when redeemed at shop Y provides a € 50 discount on Apple products, and voucher code Y, which when redeemed at shop X offers a 10 % discount on electronics in general. Shops X and Y sell iPhones at prices of € 1,000 and € 980, respectively.

If a user enters the search term "iPhone", that system, using the matching algorithm, associates this article with the applicable vouchers. It then calculates the final price of the iPhone at each shop after deducting the corresponding voucher discount from the shop's base price.

The result, which is presented to the user, might indicate that with the redemption of the voucher code from shop X, the user would pay a price of € 900 for the iPhone, while with the redemption of the voucher code from shop Y, the user would pay € 930. Thus, in this example, the system would recommend the purchase of the iPhone from shop X as the more advantageous transaction.

In an advanced embodiment (not depicted), the Al-supported search function may further calculate the bonus points that would be awarded by each shop based on this final price. Assuming the base rate of bonus point allocation to be 1 point for every € 1 spent, with the tenfold bonus point coupon from shop X, the user would accrue 9,000 points for the purchase. With the double points coupon from shop Y, the user would accrue only 1,860 points for the same purchase. Hence, in this scenario, shop X also provides a superior bonus point offer.

To summarize, in this example, the user would receive a recommendation to purchase the iPhone from shop X, where they would pay a lower price (after voucher redemption) and accrue more bonus points (with the associated coupon). The efficiency and utility of the system lie in its ability to process, evaluate, and present this complex multi-parameter data in an understandable manner, assisting users to make purchasing decisions that provide maximum value.

### Industrial Applicability

The present invention is industrially applicable in various sectors and can be readily implemented on a commercial scale. It specifically finds significant utility in the retail and e-commerce industry, where it can substantially enhance the value proposition for customers, shops, and intermediaries alike.

For customers, the invention can provide them with an opportunity to maximize the value they receive from their purchases. By offering an automated and efficient way of identifying the shop that provides the highest value in terms of product price, coupon bonuses, and voucher discounts, the invention empowers consumers to make well-informed decisions and optimize their spending.

For online shops and retailers, the invention can help attract customers by effectively promoting their products, coupons, and vouchers. It allows them to be part of a competitive marketplace where they can strategically place their products and offers to reach customers who are specifically looking for the best deals. This can significantly enhance their customer engagement and sales, thereby positively impacting their profitability.

For intermediaries, such as e-commerce platforms and affiliate marketing websites, the invention can add substantial value to their services. By integrating the present invention into their systems, they can offer a unique, value-added feature to their users, thereby enhancing user satisfaction and retention. This in turn can lead to increased traffic and usage, which can boost their revenue generation from advertisements, referral fees, and other monetization avenues.

In essence, the industrial applicability of the invention is evident from its capability to enhance the efficiency and effectiveness of online retail transactions. Its implementation can lead to an increased level of satisfaction for all stakeholders, stimulate economic activity in the e-commerce sector, and potentially contribute to the growth and development of the online retail industry. The invention, thus, satisfies the stipulated criterion of industrial applicability.

## Claims

1. Method for optimizing the value of bonus points in an online transaction, the method comprising:
a. storing product data downloaded, for example, in extensible markup language or as comma-separated values, from multiple online shops denoted by uniform resource locator, each product tagged with a price;
b. storing coupon data obtained, for example, in JavaScript object notation, via an application programming interface, each coupon entitling to a bonus;
c. associating, by matching among the stored data, products with applicable coupons;
d. on receipt of a search term specifying a product, searching the data for the product and associated coupons; and,
e. as a result of the search, indicating a shop among the online shops that awards the maximum bonus upon purchase of the product.

2. The method according to claim 1, wherein the coupon data includes information about a time-limited availability of the coupon.

3. The method according to claim 1 or 2, wherein the result includes the price of the product and quantifies the bonus, such as in points, advertised by the shop.

4. The method according to any one of claims 1 to 3, wherein the search encompasses a ranking among those shops that offer the specified product, the ranking reflecting the bonus awarded by each of those shops.

5. The method according to any one of claims 1 to 4, wherein the search is parametric, preferably faceted.

6. The method according to any one of claims 1 to 5, wherein the search is effected by means of artificial intelligence such as machine learning.

7. The method according to any one of claims 1 to 6, further comprising storing voucher data obtained from various sources on the Internet or directly from the shops, each voucher entitling to a discount, for example, a specific percentage or cash amount.

8. The method according to claim 7, wherein the voucher code data includes information about a restriction of the discount to certain items or categories.

9. The method according to claim 7 or 8, further comprising associating the products with applicable vouchers.

10. The method according to any one of claims 7 to 9, wherein the result further indicates that shop that offers the lowest price upon redemption of the applicable vouchers.

11. The method according to any one of claims 7 to 10, wherein the ranking further reflects the final price charged by each shop at the respective discount.

12. The method according to any one of claims 7 to 11, wherein the ranking is based on a combination of the coupon and voucher data.

13. Data processing apparatus comprising means for carrying out the method of any of the preceding claims.

14. Computer program comprising instructions which, when the program is executed by a computer, cause the computer to carry out the method of any of the preceding method claims.

15. Data carrier signal carrying the program of the previous claim.
